# EUROPÄISCHE PATENTANMELDUNG

(11) **EP 3 690 774 A1**
(43) Veröffentlichungstag der Anmeldung: **05.08.2020**
(21) Anmeldenummer: 20154672.8
(22) Anmeldetag: 30.01.2020
(51) Int. Cl.: G06Q 10/06

(54) **ALARMSITUATION**

(30) Priorität: 04.02.2019 DE 102019102671
(71) Anmelder: PKE Holding AG, 1100 Wien (AT)
(72) Erfinder: Rumpler, Michael, 2392 Gruberau, (AT)
(74) Vertreter: Burgstaller, Peter

(57) **Zusammenfassung**

Computerimplementiertes Verfahren zum Erfassen von Daten in Gefährdungssituation,
welche zu einem Gefahrfeststellungszeitpunkt (8) festgestellte feststellbar ist,
wobei als IMBEREICH-Daten die Menge der personenbezogenen und/oder objektbezogenen Daten der zu einem Zeitpunkt vor dem Gefahrfeststellungszeitpunkt (8) in dem Bereich (1) anwesenden Personen beziehungsweise Objekte durch Einbuchen an einem Eingang und durch Ausbuchen an einem Ausgang ermittelt wird und die IMBEREICH-Daten in einer Datenbank abspeicherbar sind,
als FLUCHT-Daten die Menge der personenbezogenen und/oder objektbezogenen Daten der zu dem und nach dem Zeitpunkt der Gefährdungssituation an einem Fluchtort (14, 15) außerhalb des Bereiches (1) anwesenden Personen beziehungsweise Objekte ermittelt wird und die FLUCHT-Daten in der Datenbank abspeicherbar sind, wobei
als AUS-Daten die Menge der personenbezogenen und/oder objektbezogenen Daten der während eines den Gefahrauftrittszeitpunkt (16) und/oder den Gefahrfeststellungszeitpunkt (8) umfassenden Zeitraumes den Bereich (1) durch Ausbuchen an einem Ausgang verlassenden Personen beziehungsweise Objekte ermittelt wird.

## Beschreibung

Die im Folgenden offenbarte Erfindung betrifft ein computerimplementiertes Verfahren zum Erfassen von personenbezogenen und/oder objektbezogenen Daten in einer zu einem Gefahrauftrittszeitpunkt entstehenden Gefährdungssituation,
welche zu einem Gefahrfeststellungszeitpunkt festgestellte Gefährdungssituation durch einen den Bereich überwachenden Alarmsensor und/oder durch eine den Bereich überwachende Person feststellbar ist, wobei als IMBEREICH-Daten die Menge der personenbezogenen und/oder objektbezogenen Daten der zu einem Zeitpunkt vor dem Gefahrfeststellungszeitpunkt in dem Bereich anwesenden Personen beziehungsweise Objekte durch Einbuchen an einem Eingang und Ausbuchen an einem Ausgang ermittelt wird und die IMBEREICH-Daten in einer Datenbank abspeicherbar sind,
als FLUCHT-Daten die Menge der personenbezogenen und/oder objektbezogenen Daten der zu dem und nach dem Zeitpunkt der Gefährdungssituation an einem Fluchtort außerhalb des Bereiches anwesenden Personen beziehungsweise Objekte ermittelt wird und die FLUCHT-Daten in der Datenbank abspeicherbar sind.

Das erfindungsgemäße Verfahren ist auf das Erfassen von personenbezogenen Daten von Personen gerichtet, welche Personen sich vor, während und nach einer zu einem Gefahrauftrittszeitpunkt entstehenden Gefährdungssituation in einem Bereich aufhalten. Die Personen können sich nach dem Entstehen der Gefährdungssituation weiterhin in diesem Bereich aufhalten und/oder diesen Bereich verlassen.

Der Bereich kann im Rahmen der Offenbarung des erfindungsgemäßen Verfahrens eine durch eine Grenze definierte Fläche oder Körper sein, welche Fläche beziehungsweise welcher Körper durch die sichtbare oder nicht sichtbare Grenze von ihrer beziehungsweise seiner Umgebung abgrenzbar ist. Der Bereich kann beispielsweise ein durch Grenzen definierter Geländebereich, ein Gebäude, eine Liegenschaft oder ein Teilbereich der beispielhaft genannten Bereiche sein.

Unter einer Gefährdungssituation ist ein im Bereich ablaufendes oder auf diesen Bereich wirkendes Ereignis, welches Ereignis eine Gefahr für die in diesem Bereich anwesenden Personen und/oder für ein in diesem Bereich situiertes Objekt und/oder für den Bereich darstellt, zu verstehen. Die Gefahr muss keinesfalls für die Person unmittelbar spürbar oder als eine solche erkennbar sein.

Eine Person kann den Bereich als eine Person erfassbar oder mittels eines Objektes unter Erfassung des Objektes den Bereich betreten oder verlassen. Eine Person kann beispielsweise in einem Auto als Objekt den Bereich betreten oder verlassen, wobei die Person durch das Objekt verdeckt sein kann, sodass bei Eintritt in den Bereich und/oder beim Austritt aus dem Bereich das Objekt erfasst wird.

Nach dem Stand der Technik sind am Eingang und am Ausgang des Bereiches Datenerfassungsgeräte installiert, mittels welchen Datenerfassungsgeräten die personenbezogenen und/oder objektbezogenen Daten der den Bereich betretenden und der den Bereich verlassenden Personen beziehungsweise Objekte erfasst werden können. Durch einen Vergleich der personenbezogenen und/oder objektbezogenen Daten der den Bereich betretenden Personen beziehungsweise Objekte (Einbuchen) und der personenbezogenen und/oder objektbezogenen Daten der den Bereich verlassenden Personen beziehungsweise Objekte (Ausbuchen) ist unter Anwendung von Verfahren nach dem Stand der Technik zumindest die Anzahl der im Bereich anwesenden Personen ermittelbar. Es ist insbesondere durch einen Vergleich der Menge der vor dem Gefahrfeststellungszeitpunkt eingebuchten Daten und der Menge der vor dem Gefahrfeststellungszeitpunkt ausgebuchten Daten zumindest die Anzahl der im Bereich anwesenden Personen beziehungsweise Objekte ermittelbar. Diese Daten gehen als IMBEREICH-Daten in das erfindungsgemäße Verfahren ein, wobei nicht gebuchte Eingänge oder Ausgänge nicht berücksichtigt werden. Das im Folgenden beschriebene Verfahren berücksichtigt nicht ungenehmigte Betretungen des Bereiches wie Einbruch.

In einfachsten Fall kann das Einbuchen und/oder Ausbuchen mittels einer Zutrittskontrolle nach dem Stand der Technik erfolgen.

Gegebenenfalls sind die Datenerfassungsgeräte am Eingang und am Ausgang platziert, um im Bereich angeordnete weitere Datenerfassungsgeräte zu ergänzen und um die IMBEREICH-Daten zu verifizieren.

Nach dem Stand der Technik können die den Bereich betretenden Personen und/oder die den Bereich verlassenden Personen unter Erstellung von Bilddaten erfasst werden.

Der Fachmann kennt Verfahren nach dem Stand der Technik zur Erfassung der IMBEREICH-Daten. Der Fachmann wählt ein solches nach dem Stand der Technik bekanntes Verfahren in Abhängigkeit der Eigenschaften des Bereiches aus, zu welchem Bereich die IMBEREICH-Daten ermittelt werden.

Ein Ausgang im Sinne dieser Erfindung kann auch von einem Bereich in einen anderen, sicheren Bereich führen. Es muss sich nicht um einen Gebäudeausgang handeln.

Der Vorgang des Einbuchens und/oder der Vorgang des Ausbuchens kann manuell oder automatisch erfolgen.

Ebenso können nach dem Stand der Technik die personenbezogenen Daten der an einem Fluchtort anzutreffenden Personen beziehungsweise Objekte mittels Datenerfassungsgeräten nach dem Stand der Technik ermittelt werden, um so zumindest die Anzahl der Personen an dem Fluchtort zu ermitteln. Nach dem Stand der Technik ist bekannt, dass die FLUCHT-Daten erst mit dem Feststellen der Gefährdungssituation ermittelbar sind.

Die personenbezogenen und/oder objektbezogenen Daten der Personen beziehungsweise Objekte können unter Anwendung von Verfahren nach dem Stand der Technik einen Code, Bilddaten oder sonstige der Person beziehungsweise dem Objekt zugewiesenen Attribute umfassen. Der Fachmann ist in der Lage, Datenerfassungsgeräte mit geeigneten Sensoren an den Grenzen des Bereichs, insbesondere am Eingang und/oder Ausgang anzuordnen. Im Rahmen der Offenbarung des erfindungsgemäßen Verfahrens sind Beispiele der Anordnung von Datenerfassungsgeräten mit unterschiedlichen Sensoren angeführt.

WO2014037711 offenbart ein Verfahren zur Beobachtung der Evakuierung einer Liegenschaft. WO2014037711 schlägt die Generierung von drei Listen vor, nämlich eine UNSAFE-Liste, eine SAFE-Liste und eine UNLISTED-Liste. Eine Person wird bei der Registrierung an einem Fluchtort von der UNSAFE-Liste (Aufenthalt im Gefahrenbereich) in die SAFE-Liste überführt. Alle Personen, die weder in der SAFE-Liste noch in der UNSAFE-Liste geführt werden, werden in der UNLISTED-Liste geführt, was eine sehr ineffiziente Form zur Beobachtung der Evakuierung der Liegenschaft darstellt, da die UNLISTED-Liste definitionsgemäß auch Personen berücksichtigt, die zeitnah zu dem Ereignis, insbesondere vor dem Ereignis nicht in der Liegenschaft waren. WO2014037711 offenbart insbesondere keinen zeitlichen Zusammenhang zwischen der UNLISTED-Liste und dem Zeitpunkt des Auftretens der Gefahr.

Auf Seite 13, Zeile 21ffoffenbart WO2014037711 explizit das Problem des in WO2014037711 beschriebenen Verfahrens. Die Daten einer zum Gefahrfeststellungszeitpunkt oder zwischen dem Gefahrfeststellungszeitpunkt und dem Zeitpunkt des Erstellens der Listen ausgebuchten Person werden nicht weiter betrachtet, obwohl diese Person keinesfalls sicher sein muss. Das erfindungsgemäße Verfahren bietet auch eine Lösung zu dem an der genannten Textstelle von WO2014037711 beschriebenen Problem.

US20110215910 beschreibt ebenso ein Verfahren zur Beobachtung der Evakuierung einer Liegenschaft, wobei in diesem Dokument nicht das Generieren einer dritten Liste neben einer Liste über Personen mit einem unsicheren Status und einer weiteren Liste über Personen mit einem sicheren Status offenbart ist.

Das in WO2016166660 offenbarte Verfahren ist auf die Erfassung der personenbezogenen Daten der innerhalb eines Grundstückes befindlichen Personen und die personenbezogenen Daten der an einem Sammelplatz befindlichen Personen beschränkt (siehe WO2016166660[016], [017]). Es findet sich in WO2016166660 kein Hinweis auf das Erfassen von Personen, welche Personen das Grundstück nach dem Zeitpunkt des Erkennens der Alarmsituation zwar verlassen, jedoch sich nicht an einem Sammelplatz befinden. WO2016166660 offenbart sohin nicht die Erstellung der hier beschriebenen drei Listen.

WO2006085056 und US2015248824 offenbaren ebenso nicht das Erstellen einer Liste über die Daten jener Personen, welche Personen einen Bereich mit einer Gefährdung nach dem Zeitpunkt des Erkennens der Alarmsituation zwar verlassen, jedoch sich nicht an einem Sammelplatz befinden. Die Dokumente WO2006085056 und US2015248824 liefern sohin keinen Hinweis auf das Erstellen der hier beschriebenen drei Listen.

DE102013213583 ist kein zum Gegenstand der Erfindung relevantes Dokument.

Der in US2015228183 offenbarte Gegenstand weist von der hier diskutierten Erfindung weg. In US2015228183 [052] und US2015228183 [064] ist explizit angeführt, dass die Personen, welche Personen den eine Gefährdung aufweisenden Bereich verlassen und sich nicht an einem Sammelplatz einfinden, gemeinsam mit den in dem Bereich befindlichen Personen in einer Liste geführt werden. Dies stellt keine effiziente Verarbeitung der Daten im Sinne der hier diskutierten Erfindung dar.

Keines der oben genannten Dokumente spricht die Verknüpfung von personenbezogenen Daten und objektbezogenen Daten an.

Die Verfahren zur Beobachtung einer Evakuierung einer Liegenschaft weisen viele Probleme auf.

Ein Problem ist sicherlich damit behaftet, dass die Kernaufgabe in der Beobachtung von Personen liegt, wobei Personen sich - insbesondere in einer durch die Gefährdungssituation hervorgerufenen Paniknicht immer so wie gewünscht oder gefordert verhalten. Dies geschieht vor allem in Gefährdungssituationen, welche Gefährdungssituationen die Ursache für die Evakuierung einer Liegenschaft darstellen.

Ein weiteres Problem ist, dass eine Gefährdung oder eine Gefährdungssituation nicht zwangsweise unmittelbar bei der Entstehung der Gefahrensituation - im Rahmen der Offenbarung wird dieser Zeitpunkt als Gefahrauftrittszeitpunkt bezeichnet - festgestellt und in weiterer Folge als solche angezeigt werden muss.

Erfindungsgemäß werden die oben genannten Aufgabenstellungen dadurch gelöst, dass als AUS-Daten die Menge der personenbezogenen und/oder objektbezogenen Daten der während eines den Gefahrauftrittszeitpunkt und/oder den Gefahrfeststellungszeitpunkt umfassenden Zeitraumes den Bereich durch Ausbuchen an einem Ausgang verlassenden Personen beziehungsweise Objekte ermittelt wird und die AUS-Daten in der Datenbank abspeicherbar sind
welche Personen beziehungsweise Objekte sich nicht an dem Fluchtort befinden.

Die Erstellung von IMBEREICH-Daten und von FLUCHT-Daten erlaubt das Erstellen von einer Liste über die in dem Bereich anwesenden Personen und Objekte beziehungsweise der an einem Fluchtort registrierten Personen und Objekte. Es kann angenommen werden, dass die in der Liste umfassend die IMBEREICH-Daten geführten Personen gefährdet sind und die in der Liste umfassend die FLUCHT-Daten in Sicherheit sind.

Zusätzlich werden AUS-Daten generiert, durch welche AUS-Daten eine Liste über diejenigen Personen erstellbar ist, welche Personen zwischen dem Gefahrauftrittszeitpunkt und dem Gefahrfeststellungszeitpunkt den Bereich oder nach dem Gefahrfeststellungszeitpunkt über den Ausgang unter Ausbuchen verließen und sich nicht am Fluchtort zur dortigen Registrierung einfinden.

Die AUS-Daten werden nicht durch eine Aufnahme von Daten erstellt. Die AUS-Daten sind das Ergebnis der IMBEREICH-Datenmenge abzüglich der FLUCHT-Datenmenge.

Das erfindungsgemäße Verfahren basiert sohin auf der Erstellung von drei Listen: eine IMBEREICH-Liste umfassend ausschließlich IMBEREICH-Daten, eine FLUCHT-Liste umfassend ausschließlich FLUCHT-Daten und eine AUS-Liste umfassend ausschließlich AUS-Daten.

Die Personen oder Objekte, deren Daten in der AUS-Liste geführt werden, befinden sich ab dem Gefahrenauftrittszeitpunkt oder ab dem Gefahrenfeststellungszeitpunkt an einem beliebigen Ort abseits des Fluchtortes und sohin nicht am Fluchtort. Die Personen oder Objekte, deren Daten in der AUS-Liste geführt werden, befinden sich ebenso nicht in dem Bereich, da definitionsgemäß festgestellt wurde, dass die in der AUS-Liste geführten Personen oder Objekte den Bereich verlassen haben.

Die Personen oder Objekte, deren Daten in der AUS-Liste geführt werden, können sich an einem unbekannten Ort befinden.

Der Zustand einer an einem Fluchtort befindlichen Person kann durch die dort anwesenden Rettungskräfte kontrolliert werden. Der Zustand einer Person, welche Person zwar den Bereich verlassen hat, aber sich nicht an einem Fluchtort und somit an einem unbekannten Ort aufhält, ist für die nahe zu dem Bereich arbeitenden Einsatzkräfte nicht kontrollierbar. Nachdem eine Gefahr nicht für die Person unmittelbar erkennbar sein muss, besteht die Möglichkeit, dass die Person an dem unbekannten Ort in einen kritischen Gesundheitszustand verfällt. Aus diesem Grund ist das Erstellen der AUS-Daten vorteilhaft.

Das Feststellen der Gefährdungssituation kann auch das Feststellen der Art der Gefährdung für die Person oder ein Objekt umfassen. Der Fachmann kann aus der Art der Gefährdung schließen, für welchen Zeitraum eine Gefahr für die Person oder das Objekt besteht. Ein Brand mit einer Rauchentwicklung kann eine andere Auswirkung auf die Person haben wie ein Austritt eines giftigen Gases. Während bei einem Brand die Auswirkung auf die Person unverzüglich feststellbar sein kann, kann die Auswirkung des Austrittes und das Einatmen eines giftigen Gases nach einer durch den Fachmann abschätzbaren Zeitspanne feststellbar sein.

Bei dem erfindungsgemäßen Verfahren wird zumindest ein Attribut der an dem unbekannten Ort befindlichen, möglicher Weise gefährdeten Person angezeigt. Die personenbezogenen und/oder objektbezogenen Daten umfassen zumindest die Anzahl der mit dem jeweiligen Datensatz verknüpften Personen beziehungsweise Objekte, sodass in der AUS-Liste zumindest die Anzahl der darin aufgelisteten Personen beziehungsweise Objekte bekannt ist. In vorteilhafter Weise sind weitere Attribute wie Namen, Eigenschaften und Kontaktdaten der unter der AUS-Liste geführten Personen bekannt, sodass diese Personen kontaktiert werden können.

Der Zeitraum kann mit dem Gefahrfeststellungspunkt beginnen; der Zeitraum umfasst in diesem Fall den Gefahrfeststellungszeitraum .

Der Zeitraum kann mit dem Gefahrauftrittszeitpunkt beginnen und somit den Gefahrauftrittszeitpunkt und den zeitlich nachfolgenden Gefahrfeststellungszeitraum umfassen.

Nachdem der Gefahrauftrittszeitpunkt nicht durch eine übliche Sensoranordnung eindeutig bestimmbar ist, ist es im Rahmen der Durchführung dieses Verfahrens ausreichend, den Gefahrauftrittszeitpunkt beziehungsweise die zwischen dem Gefahrauftrittszeitpunkt und dem Gefahrfeststellungszeitpunkt auftretende Alarmverzögerung mit statistischen Methoden zu bestimmen oder aufgrund von Erfahrungswerten hinreichend genau abzuschätzen. Der Fachmann kann die Dauer der Alarmverzögerung abschätzen und hieraus den Gefahrenauftrittszeitpunkt bei einem bekannten Gefahrfeststellungszeitpunkt abschätzen.

Der Zeitraum kann gleichzeitig mit der Beendigung der Evakuierung des Bereiches, sprich gleichzeitig mit dem Ende der Rettungsdauer enden. Nach dem Ermessen der Rettungskräfte kann der Zeitraum auch länger gestaltet werden.

Es werden somit auch jene Personen erfasst, welche vor dem Gefahrfeststellungszeitpunkt oder zu dem Gefahrfeststellungszeitpunkt der Gefahr ausgesetzt waren.

Die personenbezogenen Daten umfassen zumindest ein Attribut beschreibend die Anzahl der mit dem jeweiligen Datensatz verknüpften Personen. Üblicher Weise ist eine Person mit einem Datensatz verknüpft.

Die personenbezogenen Daten können weiters zumindest ein Attribut aus der folgenden beispielhalft angeführten Gruppe umfassen: Name der Person, visuelle Merkmale der Person, Eigenschaften der Person, Funktion der Person, Ausbildung der Person, relevante Ausbildung der Person für die Gefährdungssituation, Kontaktdaten der Person, Gesundheitszustand der Person. Die objektbezogenen Daten können weiters zumindest ein Attribut aus der folgenden beispielhaft angeführten Gruppe umfassen: Art des Objektes, visuelle Merkmale des Objektes, Eigenschaften des Objektes.

Das erfindungsgemäße Verfahren kann den Verfahrensschritt umfassen, dass
die IMBEREICH-Daten, die FLUCHT-Daten und die AUS-Daten abgeglichen werden.

Der Abgleich der erwähnten Daten erfolgt vorteilhaft in Echtzeit. Hierdurch kann vermieden werden, dass einzelne personenbezogene Daten beispielsweise gleichzeitig als IMBEREICH-Daten und als FLUCHT-Daten geführt oder mit diesen verknüpft werden.

Bei Durchführung des erfindungsgemäßen Verfahrens wird zumindest die aktuelle Zuordnung der jeweiligen personenbezogenen Daten zu den IMBEREICH-Daten, FLUCHT-Daten oder AUS-Daten abgespeichert. Es können jedoch die Veränderungen der Daten abgespeichert werden.

Die FLUCHT-Daten und die AUS-Daten können an mehreren Fluchtorten beziehungsweise an mehreren Ausgängen ermittelt werden.

Die Fluchtorte müssen keinesfalls statische Orte sein. Die Fluchtorte können auch an veränderlichen Orten sein.

Die personenbezogenen Daten können in Form von Fotos einer Person und/oder einer Person zugewiesenen Codes und/oder Namen der Person verarbeitet werden.

Eine Person oder ein Objekt, welche Person oder welches Objekt den Fluchtort verlässt, kann aus der FLUCHT-Liste gelöscht und in der AUS-Liste geführt werden. Das erfindungsgemäße Verfahren kann sich dadurch auszeichnen, dass die Daten der den Fluchtort betretenden Person und/oder der den Fluchtort verlassenden Personen ermittelt werden. Es können hierbei Vorrichtung zum Erfassen der den Fluchtort betretenden Personen und/oder der den Fluchtort verlassenden Personen umfassen.

Es kann beispielsweise der Fluchtort mittels einer Kamera zur Erstellung von Bilddaten überwacht werden, aus welchen Bilddaten Daten der am Fluchtort eintreffenden und/oder den Fluchtort verlassenden Personen ermittelt werden können.

Die FLUCHT-Liste kann auch von einer Rettungskraft durch die Aufnahme der personenbezogenen Daten erstellt werden.

Die Flucht-Daten können durch ähnliche Verfahren wie die IMBEREICH-Daten erhoben werden, wobei der Fachmann wiederum in Abhängigkeit der Eigenschaften des Bereiches das anzuwendende Verfahren auswählt. Das erfindungsgemäße Verfahren kann sich durch eine Kombination der hier beschriebenen Verfahren zur Ermittlung der FLUCHT-Daten auszeichnen.

Das erfindungsgemäße Verfahren kann sich auch dadurch auszeichnen, dass
als personenbezogene Daten einer Person ein Attribut beschreibend die Gruppenzughörigkeit der Person zu einer Personengruppe und/oder ein Attribut beschreibend die Ortszugehörigkeit der Person zu einem Ort ermittelt und verarbeitet wird. Die Ermittlung und/oder Verarbeitung der Daten mit einer Angabe einer Gruppenzugehörigkeit kann auch unabhängig von der oben angeführten Generierung von IMBEREICH-, FLUCHT- und AUS-Daten erfolgen.

Die eingangs als Stand der Technik zu der Offenbarung der Erfindung angeführten Dokumente offenbaren lediglich, dass die personenbezogenen Daten eine Ortsangabe umfassen können. Diese Ortsangaben können hierzu dienen, dass die Hilfskräfte eine vermisste Person in einer Liegenschaft leichter auffinden können. Es zeigt sich jedoch, dass die Lokalität einer Person in einem Bereich nicht lückenlos dokumentierbar ist. Es ist dies auch nicht aufgrund von Datenschutzbestimmungen möglich.

Der weitere Lösungsansatz der hier offenbarten Erfindung basiert darauf, dass Personen Personengruppen bilden und die Personen der Personengruppe einander beobachten. Es ist dieser Lösungsansatz nicht ausschließlich mit der Erstellung von IMBEREICH-Daten, FLUCHT-Daten und AUS-Daten beschränkt. Dieser Lösungsansatz ist auch auf einen Datensatz oder zwei Datensätzen aus der Gruppe der IMBEREICH-DATEN, FLUCHT-DATEN und AUS-Daten anwendbar, wobei die anderen Datensätze zur Durchführung dieses weiteren Lösungsansatzes nicht unbedingt erstellt werden müssen.

Die Aufnahme eines Attributs beschreibend die Gruppenzugehörigkeit einer Person zu einer Personengruppe bringt den Vorteil mit sich, dass die sich außerhalb des Bereiches und/oder an einem Fluchtort befindlichen Personen über den Verbleib von weiteren Personen derselben Personengruppe befragt werden können. Diese Informationen sind zumeist aufschlussreicher als die nach dem Stand der Technik bekannten Ortsangaben.

Das erfindungsgemäße Verfahren kann auch umfassen, dass ein Attribut beschreibend die Ortszugehörigkeit einer Person zu einem Ort berücksichtigt wird. Die Berücksichtigung eines Attributs beschreibend eine Ortszugehörigkeit einer Person ist insbesondere in Kombination mit der Berücksichtigung eines Attributs beschreibend die Gruppenzugehörigkeit einer Person vorteilhaft, wie dies anhand der unten angeführten Ausführungsbeispiele beispielhaft diskutiert wird.

Die Ortszugehörigkeit kann beispielsweise eine Angabe umfassen, dass eine Person sich zu einem Zeitpunkt in oder auf einem bewegten Objekt befindet, zu welchem Objekt objektbezogene Daten vorliegen können.

Die Daten der IMBEREICH-Liste und die Daten der AUS-Liste können mit einem Wichtungsfaktor versehen und nach dem Wichtungsfaktor geordnet werden,
welcher Wichtungsfaktor durch den Benutzer direkt oder indirekt vorgegeben wird.

Der Wichtungsfaktor kann den Gesundheitszustand der in der IMBEREICH-Liste oder der in der AUS-Liste geführten Person berücksichtigen. Der Gesundheitszustand kann beispielsweise eine Behinderung der Person oder die Altersgruppe der Person berücksichtigen. Einer Person mit einer Behinderung oder einem Kind wird beispielsweise ein höherer Wichtungsfaktor zugewiesen, sodass die betreffende Person in der Liste an vorrangiger Stelle geführt ist.

Der Wichtungsfaktor kann auch berücksichtigen, ob anzunehmen ist, dass eine Person mit einer medizinischen Ausbildung in der Nähe der auf der IMBEREICH-Liste oder der in der AUS-Liste geführten Person ist und dieser Annahme entsprechend den Wichtungsfaktor reduzieren.

Über den Wichtungsfaktor kann auch eine Person einer Gruppe, die aufgrund der Attribute bekannterweise besondere Ortskenntnisse oder medizinische Kenntnisse hat, in einer der Listen an vorrangiger Stelle angezeigt werden, da diese Person vermutlich besonders gut über die anderen Mitglieder der Gruppe sowie die Situation im gefährdeten Bereich Auskunft geben kann.

Das erfindungsgemäße Verfahren kann auch umfassen, dass ein Abstand einer an dem Fluchtort befindlichen Person zu einem den Fluchtort umfassenden Fluchtortbereich oder einem Punkt des Fluchtortbereiches ermittelt wird.

Ein den Fluchtort umfassender Fluchtortbereich kann beispielsweise mit einer Kamera überwacht werden, welche Kamera Bilddaten über den Fluchtortbereich liefert. Unter Anwendung von Verfahren nach der gängigen Lehre kann der Abstand einer Person zu dem Fluchtortbereich aus diesen Bilddaten ermittelt werden. Dies erlaubt eine Überprüfung, ob eine Person in dem Fluchtortbereich anwesend ist oder den Fluchtortbereich verlässt.

Weiters kann der Abstand mittels ein Signal ausgebenden oder empfangenden Geräten ermittelt werden, welches Gerät die Person mit sich trägt.

Die Überprüfung, ob sich eine Person in dem Fluchtortbereich befindet, kann auf alle Personen angewandt werden.

Die Überprüfung, ob eine Person sich in dem Fluchtortbereich befindet, deren personenbezogenen Daten in der IMBEREICH-Liste geführt wird, kann unterbinden, dass diese Person den Fluchtort verlässt, ohne dass ihre personenbezogenen Daten aufgenommen werden.

Es kann der Abstand jener Person ermittelt werden, deren personenbezogenen Daten als FLUCHT-Daten geführt werden. Hierdurch kann unterbunden werden, dass sich die Person in einer unbefugten Weise vom Fluchtort entfernt.

Die hier offenbarte Erfindung umfasst auch einen Computer umfassend Mittel zur Durchführung des oben beschriebenen Verfahrens, wobei der Fachmann in Bezugnahme auf die Offenbarung der Erfindung Teile des oben beschriebenen Verfahrens weglassen kann.

Die hier offenbarte Erfindung betrifft auch ein Computerprogramm umfassend Befehle, welche Befehle bei der Ausführung des Computerprogramms durch einen Computer diesen Computer veranlassen, das oben beschriebene Verfahren zumindest teilweise auszuführen.

Weiters betrifft die hier offenbarte Erfindung ein Computerprogramm umfassend Befehle, welche Befehle bei der Ausführung des Computerprogramms durch den Computer einen weiteren Computer veranlassen, das oben beschriebene Verfahren zumindest teilweise auszuführen.

Die Erfindung wird durch die angeschlossenen Figuren und die nachstehende Figurenbeschreibung weiter erläutert. Der Inhalt der Figuren und die Figurenbeschreibung sind keinesfalls einschränkend auf den Gegenstand der Erfindung zu werten; der Gegenstand der Erfindung wird durch die Ansprüche bestimmt.

In den Figuren sind die folgenden Elemente durch die vorangestellten Bezugszeichen gekennzeichnet.
- 1: Bereich
- 2: Grenze
- 3: Eingang
- 4: Ausgang
- 5: Eingang - Datenaufnahmegerät
- 6: Ausgang - Datenaufnahmegerät
- 7: Zeitpunkt (vor Gefahrfeststellungszeitpunkt)
- 8: Gefahrfeststellungszeitpunkt
- 9: Zeitraum
- 10: Notausgang
- 11: Pfeil Fluchtweg durch Eingang 3
- 12: Pfeil Fluchtweg durch Ausgang 4
- 13: Pfeil (Fluchtweg durch Notausgang)
- 14: erster Fluchtort
- 15: zweiter Fluchtort
- 16: Gefahrauftrittszeitpunkt
- 17: Alarmverzögerung (zwischen Gefahrauftrittszeitpunkt und Gefahrfeststellungszeitpunkt)
- 18: Rettungsdauer
- 19: IMBEREICH-Liste
- 20: FLUCHT-Liste
- 21: AUS-Liste
- 22: Beziehung
- 23: Fluchtortbereich
- 24: Fluchtortbereich
- 25: Kamera
- 26: Kamera

Figur 1 zeigt die räumliche Anordnung des Bereiches 1, des Einganges 3, des Ausganges 4 und der Fluchtorte 14, 15 für ein erstes Anwendungsbeispiel.

Figur 2, Figur 3 und Figur 4 veranschaulichen den zeitlichen Zusammenhang von Gefahrfeststellungszeitpunkt 8, dem Zeitpunkt vor dem Gefahrfeststellungszeitpunkt 8 und dem Zeitraum 9. Bei Figur 2 beginnt der Zeitraum 9 mit dem Gefahrfeststellungszeitpunkt 8. Bei Figur 3 beginnt der Zeitraum 9 mit dem Gefahrauftrittszeitpunkt 16. Bei Figur 4 beginnt der Zeitraum 9 vor dem Gefahrauftrittszeitpunkt 16.

Figur 5 zeigt eine Darstellungsart der erhobenen Daten in Form von Listen für das in Figur 1 dargestellte Anwendungsbeispiel.

Figur 6 zeigt die räumliche Anordnung des Bereiches 1, des Einganges 3, des Ausganges 4 und der Fluchtorte 14, 15 für ein weiteres Anwendungsbeispiel.

Figur 7 zeigt eine Darstellungsart der erhobenen Daten in Form von Listen für das in Figur 6 dargestellte Anwendungsbeispiel.

Figur 8 zeigt eine weitere Anwendung des erfindungsgemäßen Verfahrens.

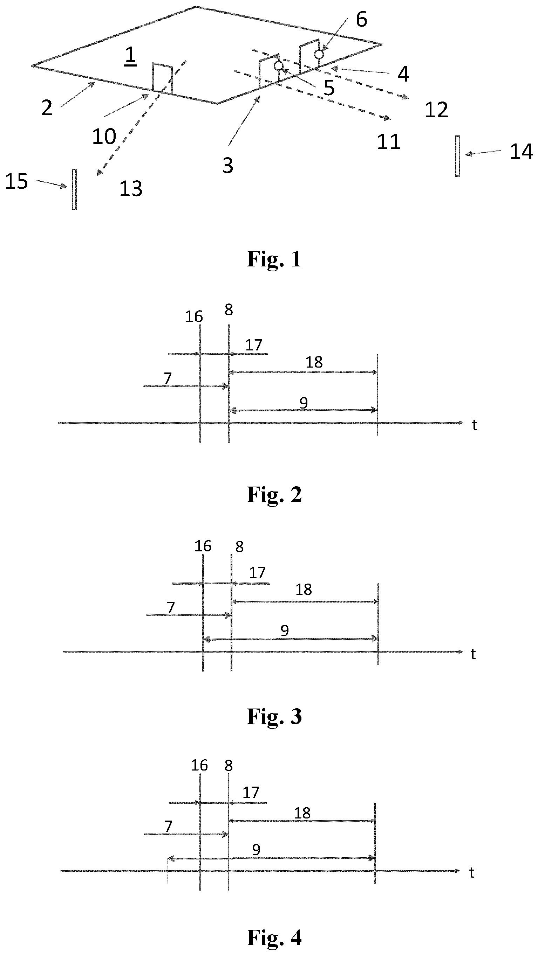

Figur 1 zeigt einen Bereich 1, auf welchen Bereich 1 das erfindungsgemäße computerimplementierte Verfahren zum Erfassen von personenbezogenen Daten in einer Gefährdungssituation an Orten um einen definierten Bereich 1 anwendbar ist.

Das erfindungsgemäße Verfahren ist ein computerimplementiertes Verfahren. Die relevanten personenbezogenen Daten werden mittels geeigneter Datenaufnahmegeräte wie Lesegeräten, Kameras und dergleichen nach dem Stand der Technik erfasst und sind in einer Datenbank abspeicherbar. Die Datenaufnahme und die Datenbank sind hierzu in einem Netzwerk integriert.

Figur 1 zeigt den Bereich 1, welcher Bereich 1 durch eine Grenze 2 von seiner Umgebung abgegrenzt und durch diese Grenze 2 eindeutig definiert ist. Der Bereich 1 umfasst einen Eingang 3 und einen Ausgang 4, über welchen Eingang 3 beziehungsweise Ausgang 4 eine in Figur 1 nicht dargestellte Person den Bereich 1 betreten oder verlassen kann. Der Eingang 3 und der Ausgang 4 können auch einstückig ausgebildet sein, was in Figur 1 nicht dargestellt ist.

Der Bereich 1 kann beispielsweise ein Gebäude sein, wobei Personen den Bereich 1 betreten und verlassen.

Der Eingang 3 umfasst eine Eingangskontrolle nach dem Stand der Technik, mittels welcher Eingangskontrolle das Betreten des Bereiches 1 durch eine Person über den Eingang 3 ermittelbar ist. Über die Eingangskontrolle werden die personenbezogenen Daten der den Bereich 1 betretenden Person mittels geeigneten Sensoren erfasst und diese Daten und/oder eine Veränderung dieser Daten in der Datenbank abgespeichert, was im Folgenden auch als Einbuchen bezeichnet wird. Die Eingangskontrolle umfasst hierzu zumindest ein in der Nähe des Eingangs 3 angeordnetes Eingang-Datenaufnahmegerät 5. Der Vorgang des Einbuchens beim Betreten des Bereiches 1 durch die Person kann manuell oder automatisch erfolgen.

Der Ausgang 4 umfasst eine Ausgangskontrolle nach dem Stand der Technik, mittels welcher Ausgangskontrolle das Verlassen des Bereiches 1 durch eine Person über den Ausgang 4 ermittelbar ist. Über die Ausgangskontrolle werden die personenbezogenen Daten der den Bereich 1 verlassenden Person erfasst und diese Daten und/oder eine Veränderung dieser Daten in der Datenbank abgespeichert, was im Folgenden auch als Ausbuchen bezeichnet wird. Die Ausgangskontrolle umfasst hierzu zumindest ein in der Nähe des Ausganges 4 angeordnetes Ausgang-Datenaufnahmegerät 6. Der Vorgang des Ausbuchens beim Verlassen des Bereiches 1 durch die Person kann manuell oder automatisch erfolgen.

Die Beschreibung des erfindungsgemäßen Verfahrens beschränkt sich darauf, dass im Normalfall die Personen ausschließlich über den Eingang 3 und über den Ausgang 4 den Bereich 1 betreten beziehungsweise verlassen. Einbruchsszenarien oder ähnliches werden bei der Beschreibung des erfindungsgemäßen Verfahrens nicht betrachtet, um die Beschreibung des erfindungsgemäßen Verfahrens nicht unnötig kompliziert zu machen.

Durch das Erfassen der personenbezogenen Daten der den Bereich 1 betretenden und den Bereich 1 verlassenden Personen ist im Normalfall zumindest die Anzahl der im Bereich 1 anwesenden Personen bekannt. Die personenbezogenen Daten können neben der Anzahl auch weitere Attribute wie Name, Funktion et cetera der im Bereich 1 anwesenden Personen umfassen, sodass auch bekannt sein kann, wer et cetera im Bereich 1 anwesend ist.

Es ist sohin zu jedem Zeitpunkt 7 vor dem Gefahrfeststellungszeitpunkt 8 zumindest die Anzahl der im Bereich 1 anwesenden Personen über das Erfassen der personenbezogenen Daten bekannt. Gegebenenfalls ist auch ein weiteres Attribut über die im Bereich 1 anwesenden Personen bekannt, wobei nachstehend beispielhaft erläutert wird, wie weitere Attribute vorteilhaft im Rahmen des erfindungsgemäßen Verfahrens genutzt werden können. Die personenbezogenen Daten der im Bereich 1 anwesenden Personen werden als IMBEREICH-Daten in einer Datenbank abgespeichert oder mit dem Attribut IMBEREICH versehen.

Die Gefährdungssituation wird zu einem Gefahrfeststellungszeitpunkt 8 durch einen Alarmsensor nach dem Stand der Technik oder durch eine Person festgestellt. Die Feststellung der Gefährdungssituation basiert auf Vorrichtungen und Verfahren nach dem Stand der Technik.

Eine Gefährdungssituation stellt ab dem Gefahrauftrittszeitpunkt 16 eine Gefährdung für die im Bereich 1 befindlichen Personen dar. Die durch die Gefährdungssituation einhergehende Gefährdung der Personen muss keinesfalls für die Personen unmittelbar erkennbar oder spürbar sein.

Es ist in Figur 2, Figur 3 und Figur 4 ein Zeitstrahl aufgetragen. Die Gefährdungssituation wird zu dem Gefahrfeststellungszeitpunkt 8 festgestellt. Zu dem Zeitpunkt 7 vor dem Gefahrfeststellungszeitpunkt 8 ist zumindest die Anzahl der Personen im Bereich 1 und gegebenenfalls zumindest ein Attribut der im Bereich 1 befindlichen Personen bekannt.

Mit der Feststellung des Alarmes zum Gefahrfeststellungszeitpunkt 8 ertönt nach dem Stand der Technik ein Alarmsignal, mit welchem Alarmsignal die im Bereich 1 befindlichen Personen zum Verlassen den Bereiches 1 aufgefordert werden. Die Personen verlassen den Bereich 1 über den Ausgang 4 und weiters über den Eingang 3 und einen Notausgang 10, wie dies in Figur 1 mittels der Pfeile 11, 12, 13 angezeigt ist.

Durch die Feststellung des Alarmes zum Gefahrfeststellungszeitpunkt 8 werden zusätzlich zu dem Ausgang 4 auch der Eingang 3 und der Notausgang 10 zum Verlassen des Bereiches 1 freigegeben. Vor dem Gefahrfeststellungszeitpunkt 8 ist ein Verlassen des Bereiches 1 ausschließlich über den Ausgang 4 möglich. Obige Bestimmungen entsprechen den üblichen Regeln im Rahmen einer Zutrittskontrolle eines Bereiches 1.

Die internationalen Standards zur Evakuierung von Gebäuden sehen vor, dass sich die fliehenden Personen an ausgewiesenen Fluchtorten 14, 15 versammeln. In Figur 1 sind ein erster Fluchtort 14 in der Nähe von Eingang 3 und Ausgang 4 und ein zweiter Fluchtort 15 in der Nähe des Notausganges 10 eingetragen. Die den Bereich 1 über die Fluchtwege 11, 12 verlassenden Personen gelangen im Regelfall zum ersten Fluchtort 14 und die den Bereich 1 über den Fluchtweg 13 verlassenden Personen gelangen im Regelfall zum zweiten Fluchtort 15.

Es werden bei der Durchführung des erfindungsgemäßen Verfahrens die personenbezogenen Daten der sich an den Fluchtorten 14, 15 einfindenden Personen als FLUCHT-Daten aufgenommen oder die jeweiligen personenbezogenen Daten mit dem Attribut FLUCHT versehen. Vorzugsweise wird der Zeitpunkt des Erfassens der personenbezogenen Daten am Fluchtort 14, 15 als der Zeitpunkt des Überganges von IMBEREICH zu FLUCHT dokumentiert.

Die FLUCHT-Daten umfassen als personenbezogene Daten zumindest eine Anzahl der am jeweiligen Fluchtort 14, 15 befindlichen Personen und gegebenenfalls ein Attribut dieser Personen. Es sind die FLUCHT-Daten in der Datenbank abspeicherbar.

Der Gesundheitszustand der an den Fluchtorten 14, 15 eintreffenden Personen kann durch die Hilfskräfte überprüft werden. Die an einem Fluchtort 14, 15 anwesenden Personen werden als in Sicherheit betrachtet.

Das erfindungsgemäße Verfahren stellt sich die Aufgabe, die Anzahl und die Attribute der potentiell gefährdeten Personen zu ermitteln, welche Personen sich nicht an einem der Fluchtorte 14, 15 einfinden.

Es soll hierdurch prinzipiell die Sicherheit während einer Gefährdungssituation erhöht werden. Das erfindungsgemäße Verfahren stellt sich sohin der Aufgabe, die potentiell gefährdeten Personen rasch und genau zu erfassen.

Die erfindungsgemäße Lösung sieht vor, dass die personenbezogenen Daten jener Personen, die den Bereich 1 unter Ausbuchen verlassen und sich nicht an einem Fluchtort 14, 15 einfinden, als AUS-Daten gesammelt werden.

Der Gefahrfeststellungszeitpunkt 8 muss keinesfalls zeitgleich mit dem Gefahrauftrittszeitpunkt 16 sein, zu welchem Gefahrauftrittszeitpunkt 16 die Gefährdungssituation tatsächlich auftritt. In Figur 2, Figur 3 und Figur 4 ist der Gefahrfeststellungszeitpunkt 8 zeitlich nachfolgend zu dem Gefahrauftrittszeitpunkt 16 dargestellt, wie dies auch in der Regel der Fall ist. Die Offenbarung des erfindungsgemäßen Verfahrens ist keinesfalls auf die Berücksichtigung des - tatsächlich auftretenden - zeitlich nachfolgend auftretenden Gefahrauftrittszeitpunkts 16 und Gefahrfeststellungspunkts 8 beschränkt. Das erfindungsgemäße Verfahren ist auch für die Vereinfachung anwendbar, dass Gefahrauftrittszeitpunkt 16 und Gefahrfeststellungszeitpunkt 8 als zeitgleich auftretend betrachtet werden. Die ist in den Figuren der Offenbarung nicht dargestellt.

Eine ausschließliche Betrachtung der personenbezogenen Daten ab dem Gefahrfeststellungszeitpunkt 8 führt dazu, dass die Personen, die nach dem Gefahrauftrittszeitpunkt 16 oder nach dem Gefahrfeststellungszeitpunkt 8 einer Gefährdung unterlagen und anschließend nicht mehr als IMBEREICH gebucht sind, nicht beachtet werden.

Es kann bei Anwendung des erfindungsgemäßen Verfahrens der Zeitraum 9 unterschiedliche Zeitspannen betreffen, wie dies durch die Figur 2, Figur 3 und Figur 4 veranschaulicht wird.

Eine Ausführungsform des erfindungsgemäßen Verfahrens kann sein, dass als AUS-Daten die Menge der personenbezogenen Daten der ab dem Gefahrfeststellungszeitpunkt 8 den Bereich 1 durch Ausbuchen an einem Ausgang 4 verlassenden Personen ermittelt wird und in der Datenbank abspeicherbar ist (siehe Figur 2). Es werden die personenbezogenen Daten der potentiell gefährdeten Personen erfasst, die den Bereich 1 über den Ausgang 4 unter Ausbuchung verlassen und sich nicht an einem Fluchtort 14, 15 einfinden. Diese Personen können gefährdet sein, zumal die Gefahr nicht spürbar sein muss.

Eine weitere Ausführungsform des erfindungsgemäßen Verfahrens kann sein, dass als AUS-Daten die Menge der personenbezogenen Daten ab dem Gefahrauftrittszeitpunkt 16 den Bereich 1 durch Ausbuchen verlassenden Personen erfasst und in der Datenbank abspeicherbar ist (siehe Figur 3). Der Zeitraum 9 beginnt sohin mit dem Gefahrauftrittszeitpunkt 16 und umfasst den Gefahrauftrittszeitpunkt 16 und den Gefahrfeststellungszeitpunkt 8.

Eine weitere Ausführungsform des erfindungsgemäßen Verfahrens kann sein, dass als AUS-Daten die Menge der personenbezogenen Daten ab eine Zeitpunkt vor dem Gefahrauftrittszeitpunkt 16 den Bereich 1 durch Ausbuchen verlassenden Personen erfasst und in der Datenbank abspeicherbar ist (siehe Figur 4). Der Zeitraum 9 beginnt sohin mit dem Gefahrauftrittszeitpunkt 16 und umfasst den Gefahrauftrittszeitpunkt 16 und den Gefahrfeststellungszeitpunkt 8.Weiters können die personenbezogenen Daten der Personen erfasst werden, welche Personen nach dem Gefahrfeststellungszeitpunkt 8 den Bereich 1 verlassen und sich nicht an einem Fluchtort 14, 15 einfinden.

Der Fachmann wählt die Dauer des Zeitraumes 9 in Abhängigkeit der möglichen Gefährdungssituation und der anzunehmenden Alarmverzögerung 17, wodurch die in Figur 2, Figur 3 und Figur 4 gezeigten Ausführungsformen des erfindungsgemäßen Verfahrens jeweils durchgeführt werden. Unter der Alarmverzögerung 17 wird jene Zwischenzeit zwischen dem Gefahrauftrittszeitpunkt 16 des tatsächlichen Geschehens der Gefährdungssituation und dem Gefahrfeststellungszeitpunkt 8 verstanden.

Die in Figur 3 gezeigte Ausführungsform betrifft den Fall, dass der Gefahrauftrittszeitpunkt 16 sehr gut abschätzbar ist und die Zeitspanne 9 beginnend mit dem Gefahrauftrittszeitpunkt 16 sehr gut definierbar ist.

Die in Figur 4 gezeigte Ausführungsform betrifft den Fall, dass der Gefahrauftrittszeitpunkt 16 nicht gut abschätzbar ist und der Fachmann den Zeitraum 9 so definiert, dass der Zeitraum 9 mit einer hohen Wahrscheinlichkeit den Gefahrauftrittszeitpunkt 16 umfasst. Der Fachmann lässt den Zeitraum 9 zu einem Zeitpunkt vor dem Gefahrauftrittszeitpunkt 16 beginnen.

Der Zeitraum 9 kann einerseits die Dauer der Alarmverzögerung 17 umfassen, wobei die zu berücksichtigende Alarmverzögerung 17 im Wesentlichen nur durch statische Methoden ermittelbar ist. Gegebenenfalls ist die statistisch ermittelte Alarmverzögerung 17 zur Dimensionierung des Zeitraumes 9 mit einem Sicherheitsbeiwert zu beaufschlagen (siehe Figur 4).

Die Zeitraum 9 kann andererseits die Rettungsdauer 18 umfassen, um sicher zu gehen, dass die personenbezogenen Daten der den Bereich 1 unter Ausbuchen verlassenden Personen solange erfasst werden, bis keine Gefährdung mehr besteht.

Der Fachmann ist in der Lage, den Zeitraum 9 nach den obigen Gesichtspunkten zu wählen.

Das erfindungsgemäße Verfahren kann den Schritt umfassen, dass die IMBEREICH-Daten, die FLUCHT-Daten und die AUS-Daten abgeglichen werden. Auf diese Weise kann unterbunden werden, dass die personenbezogenen Daten einer Person zumindest zwei Mal den IMBEREICH-Daten, FLUCHT-Daten oder AUS-Daten zugewiesen sind. Falls personenbezogenen Daten einer Person zwei Mengen von personenbezogenen Daten zugewiesen sind, so wird ein Alarmsignal ausgegeben und/oder diese Daten den IMBEREICH-Daten oder den AUS-Daten zugewiesen.

Das erfindungsgemäße Verfahren kann derart gestaltet sein, dass die Eingangskontrolle am Eingang 3 und die Ausgangskontrolle am Ausgang 4 mit der Datenbank zur Durchführung eines Austausches der personenbezogenen Daten kommuniziert. Derartige Vorrichtungen sind nach dem Stand der Technik bekannt.

Mit dem Gefahrfeststellungszeitpunkt 8 werden mobile Lesegeräte zum Erfassen von personenbezogenen Daten aktiviert. Hilfskräfte, welche an den Fluchtpunkten 14, 15 oder an sonstigen Orten außerhalb des Bereiches 1 angeordnet sind, nehmen mittels der mobilen Lesegeräte die personenbezogenen Daten der sich an den Fluchtorten 14, 15 einfindenden oder an den sonstigen Orten außerhalb des Bereiches 1 befindlichen Personen auf. Die mobilen Lesegeräte kommunizieren vorzugsweise über Funk mit der Datenbank, sodass ein stetiger Abgleich der gelesenen personenbezogenen Daten möglich ist.

Das erfindungsgemäße Verfahren kann auch einschließen, dass die FLUCHT-Daten und die AUS-Daten an mehreren Fluchtorten 14, 15 beziehungsweise an mehreren Ausgängen ermittelt werden. Die Figur 1 zeigt, dass der Eingang 3, der Ausgang 4 und der Notausgang 10 zum Fliehen aus dem Bereich 1 dienen können.

Die personenbezogenen Daten umfassen zumindest die Anzahl der mit den jeweiligen Daten verknüpften Personen. In den meisten Fällen betreffen die personenbezogenen Daten jeweils eine Person. Die personenbezogenen Daten können weiters ein Attribut umfassen, welches Attribut beispielsweise eine Angabe über den Namen der Person und/oder die Funktion der Person im Bereich 1 umfasst. Die personenbezogenen Daten können auch ein Foto der Person und/oder einen der Person zugewiesenen Code umfassen.

Die personenbezogenen Daten können auch ein Attribut umfassen, über welches Attribut die Gruppenzugehörigkeit einer Person zu einer Personengruppe angegeben ist. Üblicher Weise wissen die Personen einer Gruppe über einander, insbesondere über den Gesundheitszustand der jeweils anderen Person Bescheid. Das erfindungsgemäße Verfahren schlägt vor, die Gruppenzugehörigkeit von Personen - auch unabhängig von der Generierung von IMBEREICH-Daten, FLUCHT-Daten und AUS-Daten - bei einer Gefahrensituation zu nutzen.

Die personenbezogenen Daten können auch ein Attribut umfassen, über welches Attribut die Ortszugehörigkeit einer Person zu einem Ort beschrieben ist. Die Verwendung der Attribute beschreibend eine Ortszugehörigkeit ist insbesondere in Kombination mit einem Attribut beschreibend die Gruppenzugehörigkeit einer Person vorteilhaft.

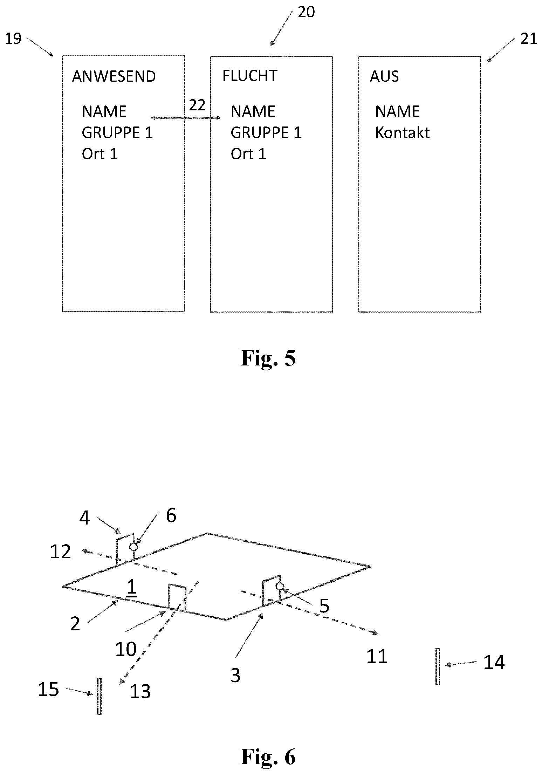

Figur 5 zeigt eine IMBEREICH-Liste 19 umfassend die Menge der IMBEREICH-Daten, eine FLUCHT-Liste 20 umfassend die Menge der AUS-Daten und eine AUS-Liste 21 umfassend die AUS-Daten.

Bei einer Evakuierung eines Gebäudes wie beispielsweise in Figur 1 dargestellt können die Menge der Daten auf Bildschirmen von mobilen Geräten in dieser oder einer ähnlichen Form dargestellt werden. Die IMBEREICH-Liste 19 kann beispielsweise rot hinterlegt sein, da in dieser Liste die Daten von Personen angezeigt werden, die gefährdet sind, da diese Personen sich im Bereich 1 aufhalten. Die FLUCHT-Liste 20 kann beispielsweise grün hinterlegt sein, da in dieser Liste die Daten von Personen angeführt sind, welche Personen anzunehmender Weise in Sicherheit sind. Die AUS-Liste 21 kann beispielsweise gelb hinterlegt sein, da in dieser Liste die Daten von Personen angezeigt werden, welche Personen zwar den Bereich 1 verlassen haben, aber deren weiteres Schicksal, insbesondere deren Gesundheitszustand nicht bekannt ist.

Die folgende Beschreibung der Zusammenhänge zwischen den einzelnen Attributen der personenbezogenen Daten ist nicht auf die Anwendung der angeführten Listen beschränkt. Der Fachmann ist in der Lage, die im Folgenden aufgezeigte Systematik auch für die nicht erwähnten Listen anzuwenden.

Die Anzeige der personenbezogenen Daten in der IMBEREICH-Liste 19 kann das Attribut NAME umfassend den Vornamen und den Nachnamen einer Person und ein Attribut GRUPPE beschreibend eine Gruppenzughörigkeit - hier GRUPPE 1 - umfassen. In hierzu analoger Weise kann die FLUCHT-Liste 20 das Attribut NAME und GRUPPE umfassen.

Im Einsatzfall kann es für die Einsatzkräfte entscheidend sein, in möglichst kurzer Zeit Information über die im Bereich 1 anwesenden Personen zu erhalten. Die Anzeige der Listen 19, 20, 21 kann auch umfassen, dass Beziehungen zwischen den personenbezogenen Daten der einzelnen Listen aufgezeigt werden. Figur 5 veranschaulicht die Beziehung 22 zwischen den personenbezogenen Daten der IMBEREICH-Liste 19 und den personenbezogenen Daten der FLUCHT-Liste 20 durch einen Pfeil. Diese Beziehung kann durch einen Vergleich der Attribute gefunden werden. Im Einsatzfall kann eine Einsatzkraft Informationen über die in der IMBEREICH-Liste 19 geführten Personen über die in der FLUCHT-Liste 20 geführten Personen erhalten, da üblicher Weise Personen einer Gruppe - hier der Gruppe 1 - voneinander Bescheid wissen.

Die Darstellung von Beziehungen zwischen Personen ist nicht auf die Erstellung von IMBEREICH-Daten, FLUCHT-Daten und AUS-Daten beschränkt. Es sind zwei der genannten Datengruppen ausreichend.

Die Anzeige der AUS-Liste 21 kann die Anzeige des Attributes NAME und des Attributes KONTAKT umfassen. Das Attribut KONTAKT kann eine Telefonnummer umfassen, unter welcher Telefonnummer die jeweilige Person erreichbar ist. Die Einsatzkraft kann vorzugsweise mit dem mobilen Gerät die Person kontaktieren und sich über den Ort und/oder Gesundheitszustand erkundigen.

Diese Form der Anzeige ist nicht auf die AUS-Liste 21 beschränkt und kann auch auf die anderen Listen angewandt werden.

Figur 6 zeigt den Bereich 1, welcher Bereich 1 durch eine Grenze 2 von seiner Umgebung abgegrenzt und durch diese Grenze 2 eindeutig definiert ist. Der Bereich 1 umfasst einen Eingang 3 und einen Ausgang 4, über welchen Eingang 3 beziehungsweise Ausgang 4 eine in Figur 1 nicht dargestellte Person und ein in Figur 1 nicht dargestelltes Objekt den Bereich 1 betreten oder verlassen kann. Der Eingang 3 und der Ausgang 4 können auch einstückig ausgebildet sein, was in Figur 1 nicht dargestellt ist.

Der Bereich 1 kann beispielsweise ein Tunnel oder ein mit Autos zu befahrender Teil eines Parkhauses sein, wobei die Personen im Normalfall mit Autos den Bereich 1 betreten und verlassen.

Der Eingang 3 umfasst eine Eingangskontrolle nach dem Stand der Technik, mittels welcher Eingangskontrolle das Einfahren eines Autos als ein Objekt in den Bereich 1 ermittelbar ist. Über die Eingangskontrolle werden die objektbezogenen Daten über das einfahrende Auto mittels geeigneten Sensoren erfasst und diese Daten und/oder eine Veränderung dieser Daten in der Datenbank abgespeichert, was im Folgenden auch als Einbuchen bezeichnet wird. Die Eingangskontrolle umfasst hierzu zumindest ein in der Nähe des Eingangs 3 angeordnetes Eingang-Datenaufnahmegerät 5. Der Vorgang des Einbuchens kann manuell oder automatisch erfolgen.

Der Ausgang 4 umfasst eine Ausgangskontrolle nach dem Stand der Technik, mittels welcher Ausgangskontrolle das Ausfahren eines Autos aus dem Bereiches 1 über den Ausgang 4 ermittelbar ist. Über die Ausgangskontrolle werden die objektbezogenen Daten des aus dem Bereich 1 ausfahrenden Autos erfasst und diese Daten und/oder eine Veränderung dieser Daten in der Datenbank abgespeichert, was im Folgenden auch als Ausbuchen bezeichnet wird. Die Ausgangskontrolle umfasst hierzu zumindest ein in der Nähe des Ausganges 4 angeordnetes Ausgang-Datenaufnahmegerät 6. Der Vorgang des Ausbuchens kann manuell oder automatisch erfolgen.

Nachdem in dem Auto zumindest eine Person sitzt, können die objektbezogenen Daten über das einfahrende oder ausfahrende Auto auch als personenbezogene Daten zu der im Auto befindlichen Person angesehen werden. Die Person betritt mit Hilfe des Autos den Bereich oder verlässt mit Hilfe des Autos den Bereich.

Durch das Erfassen der objektbezogenen Daten des in den Bereich 1 einfahrenden und aus dem Bereich 1 ausfahrenden Autos ist zumindest die Anzahl der im Bereich 1 anwesenden Autos als Objekte bekannt. Die objektbezogenen Daten können neben der Anzahl des mit dem objektbezogenen Datensatz verknüpften Autos auch weitere Attribute wie Eigenschaft, Kennzeichen et cetera der erfassten Autos umfassen.

Es ist sohin zu jedem Zeitpunkt 7 vor dem Gefahrfeststellungszeitpunkt 8 zumindest die Anzahl der im Bereich 1 anwesenden Autos als Objekte über das Erfassen der objektbezogenen Daten bekannt.

Im Falle einer Gefährdungssituation verlassen die Personen zu Fuß oder mit dem Auto den Bereich 1. In Analogie zu der obigen Beschreibung wird ein Zeitraum 9 definiert, für welchen Zeitraum 9 AUS-Daten erhoben werden.

Die Menge der objektbezogenen Daten der im Bereich 1 befindlichen Autos wird der Menge der IMBEREICH-Daten zugeordnet. Die im Bereich 1 zu dem und nach dem Gefahrfeststellungszeitpunkt anwesenden Autos und vor allem die sich in diesen Autos befindlichen Personen werden als gefährdet eingestuft.

Die Menge der personenbezogenen Daten der an einem Fluchtort 14, 15 aufgenommenen Personen wird der Menge der FLUCHT-Daten zugeordnet. Weiters kann die Menge der objektbezogenen Daten der an einem Fluchtort 14,15 aufgenommenen Autos den FLUCHT-Daten zugeordnet werden.

Die objektbezogenen Daten der während des Zeitraumes 9 den Bereich 1 über den Ausgang 6 verlassenden Autos werden - sofern sich die Personen nicht an einem Fluchtort 14, 15 einfinden - den AUS-Daten zugeordnet, da sich die Personen an einem unbekannten Ort befinden und der Gesundheitszustand der Personen nicht bekannt ist.

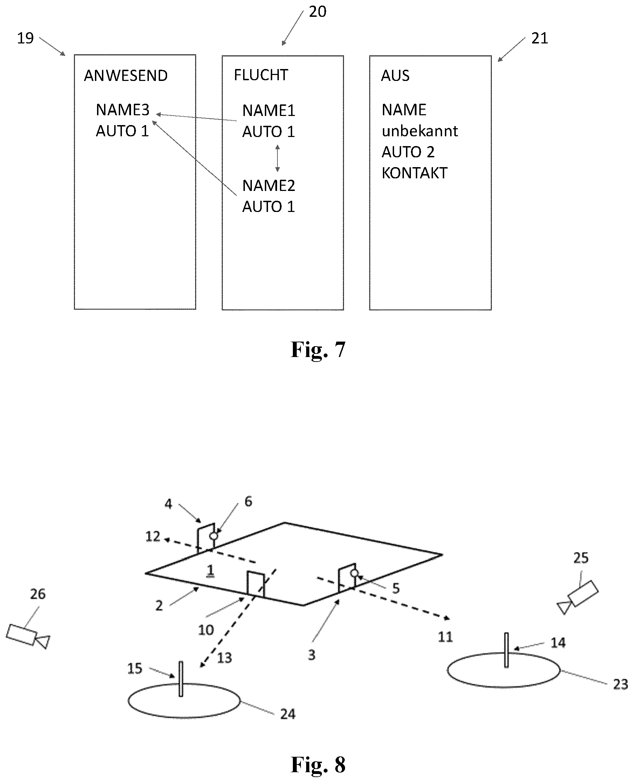

Figur 7 zeigt die listenförmige Darstellung der IMBEREICH-Daten, FLUCHT-Daten und AUS-Daten bei einer Evakuierung eines Bereiches 1 wie in Figur 6 dargestellt und oben erläutert. Die Figur 7 umfasst eine IMBEREICH-Liste 19, eine FLUCHT-Liste 20 und eine AUS-Liste 21 zur Darstellung der relevanten Daten.

Eine am Fluchtort 14, 15 befindliche Person kann von den Einsatzkräften über die Anzahl der Personen im jeweiligen Auto befragt werden, wobei eine Angabe einer Person, mit welchem Auto diese Person in den Bereich 1 eingefahren ist, als eine Angabe eines Attributs beschreibend eine Ortszugehörigkeit oder eine Gruppenzugehörigkeit - in Figur 7 AUTO 1 - angesehen werden kann.

Eine Person kann angeben, wie viele Personen in einem Auto in den Bereich 1 eingefahren sind. In Abhängigkeit eines Abgleiches des Attributes AUTO1 der in der Menge der FLUCHT-Daten geführten Personen kann eine Person mit dem Attribut AUTO1 in der IMBEREICH-Liste generiert werden. Figur 7 umfasst weiters eine AUS-Liste, in welcher Liste die in dem Zeitraum 9 aus dem Bereich 1 gefahrenen Autos - hier AUTO2 - angeführt sind. Nachdem die im Auto befindlichen Personen nicht erfassbar sind, kann die Liste einen Hinweis auf eine unbekannte Person umfassen. Die AUS-Liste kann ein Kontakt-Attribut umfassen, wie der Halter des Autos kontaktiert werden kann.

Figur 8 veranschaulicht eine Anwendung des erfindungsgemäßen Verfahrens bei der Evakuierung einer Haftanstalt oder einer sonstigen Einrichtung, bei welcher Einrichtung die Insassen derart überwacht werden müssen, dass ein unbefugtes Verlassen des Bereiches 1 oder des Fluchtortes 14, 15 unterbunden wird.

Es symbolisiert in Figur 8 der Bereich 1 beispielsweise die Haftanstalt, welcher Bereich 1 durch eine Grenze 2 von seiner Umgebung abgegrenzt und durch diese Grenze 2 eindeutig definiert ist. Der Bereich 1 umfasst einen Eingang 3 und einen Ausgang 4, über welchen Eingang 3 beziehungsweise Ausgang 4 eine in Figur 1 nicht dargestellte Person den Bereich 1 betreten oder verlassen kann. Der Eingang 3 und der Ausgang 4 können auch einstückig ausgebildet sein, was in Figur 1 nicht dargestellt ist.

Der Eingang 3 umfasst eine Eingangskontrolle nach dem Stand der Technik, mittels welcher Eingangskontrolle das Betreten des Bereiches 1 durch die Person ermittelbar ist. Der Vorgang des Einbuchens kann manuell oder automatisch erfolgen.

Der Ausgang 4 umfasst eine Ausgangskontrolle nach dem Stand der Technik, mittels welcher Ausgangskontrolle das Verlassen des Bereiches 1 durch eine Person ermittelbar ist. Der Vorgang des Ausbuchens kann manuell oder automatisch erfolgen.

Bei einer Haftanstalt werden weiters unter Beachtung der gängigen Vorschriften Standeslisten über die Insassen der Haftanstalt geführt. Es liegen weiters Listen über so genannte Freigänger auf. Das Wachpersonal oder die Bediensteten der Haftanstalt werden weiters über allgemeine Listen und/oder ein Wachbuch und/oder eine Diensteinteilung erfasst.

Die obige Erfassung der Insassen und/oder der Bediensteten kann in Ergänzung zu der Zutrittskontrolle mittels Einbuchen und Ausbuchen erfolgen.

Es ist sohin zu jedem Zeitpunkt 7 vor dem Gefahrfeststellungszeitpunkt 8 die Anzahl der im Bereich 1 anwesenden Personen umfassend Insassen und Bedienstete bekannt.

Im Falle einer Gefährdungssituation verlassen die Personen zu Fuß den Bereich 1. In Analogie zu der obigen Beschreibung wird ein Zeitraum 9 definiert, für welchen Zeitraum 9 AUS-Daten erhoben werden.

Die Menge der personenbezogenen Daten der im Bereich 1 befindlichen Personen wird der Menge der IMBEREICH-Daten zugeordnet. Die im Bereich 1 zu dem und nach dem Gefahrfeststellungszeitpunkt anwesenden Personen werden wegen der vorliegenden Gefährdungssituation als gefährdet eingestuft.

Die Menge der personenbezogenen Daten der an einem Fluchtort 14, 15 aufgenommenen Personen wird der Menge der FLUCHT-Daten zugeordnet.

Die objektbezogenen Daten der während des Zeitraumes 9 den Bereich 1 über den Ausgang 6 verlassenden Personen werden - sofern sich die Personen nicht an einem Fluchtort 14, 15 einfinden - den AUS-Daten zugeordnet, da sich die Personen an einem unbekannten Ort befinden und der Gesundheitszustand der Personen nicht bekannt ist.

Bei der Anwendung des erfindungsgemäßen Verfahrens auf eine Haftanstalt als der Bereich 1 sind die am Fluchtort 14, 15 befindlichen Personen derart zu überwachen, dass ein Verlassen des Fluchtortes 14, 15 durch die Personen unterbunden wird. Es soll den Insassen die Möglichkeit genommen werden, während einer Gefährdungssituation zu flüchten. Dies kann auf die am Fluchtort 14, 15 befindlichen Insassen aus der Gruppe der am Fluchtort befindlichen Personen beschränkt werden.

Es können Fluchtortbereiche 23, 24 umfassend den jeweiligen Fluchtort 14, 15 definiert werden, welche

Fluchtortbereiche 23, 24 nicht die Insassen aus der Gruppe der am Fluchtort befindlichen Personen nicht verlassen dürfen. In Figur 8 umfasst der Fluchtortbereich 23 den Fluchtort 14 und der Fluchtortbereich 24 den Fluchtort 15. Es wird angenommen, dass die Fluchtortbereiche 23, 24 keiner Gefährdung unterliegen und sohin die dort befindlichen und in den FLUCHT-Daten geführten Personen sicher in Bezug auf die Gefährdung sind. Die am Fluchtort 14, 15 befindlichen Personen können weiters durch Einsatzkräfte laufend beobachtet werden.

Der Fluchtortbereich 23, 24 kann eine bauliche Maßnahme wie einen Zaun, eine Mauer oder dergleichen umfassen, welche bauliche Maßnahme die Insassen am Verlassen des Fluchtbereiches 23, 24 hindert.

Der Fluchtortbereich 23, 24 und gegebenenfalls ein an den jeweiligen Fluchtortbereich 23, 24 angrenzender weiterer Überwachungsbereich können mittels einer Kamera 25, 26 überwacht werden. Es ist nach dem Stand der Technik möglich, die Insassen über die Erkennung von personenbezogenen Merkmalen von den Bediensteten der Haftanstalt zu unterscheiden. Es können hierbei computerimplementierte, auf der Verarbeitung von durch die Kameras 25, 26 aufgenommenen Bilddaten basierenden Verfahren wie Gesichtserkennung et cetera angewandt werden.

Aus den mittels der Kamera 25, 26 erstellten Bilddaten kann unter Anwendung der gängigen Lehre der Abstand einer Person zu dem Fluchtortbereich 23, 24 ermittelt werden. Mittels der Bilddaten kann auch der Gesundheitszustand der Personen unter Beschränkung auf visuelle Merkmale überwacht werden.

Die Insassen können weiteres eine ein Signal ausgebende oder empfangende Vorrichtung tragen, welches Signal die Bestimmung der Entfernung zum Fluchtortbereich 23, 24 erlaubt.

## Patentansprüche

1. Computerimplementiertes Verfahren zum Erfassen von personenbezogenen und/oder objektbezogenen Daten in einer zu einem Gefahrauftrittszeitpunkt (16) entstehenden Gefährdungssituation,
welche zu einem Gefahrfeststellungszeitpunkt (8) festgestellte Gefährdungssituation durch einen den Bereich (1) überwachenden Alarmsensor ermittelbar und/oder durch eine den Bereich (1) überwachende Person feststellbar ist,
wobei als IMBEREICH-Daten die Menge der personenbezogenen und/oder objektbezogenen Daten der zu einem Zeitpunkt (7) vor dem Gefahrfeststellungszeitpunkt (8) in dem Bereich (1) anwesenden Personen beziehungsweise Objekte durch Einbuchen an einem Eingang und durch Ausbuchen an einem Ausgang ermittelt wird und die IMBEREICH-Daten in einer Datenbank abgespeichert werden,
als FLUCHT-Daten die Menge der personenbezogenen und/oder objektbezogenen Daten der zu dem und nach dem Zeitpunkt der Gefährdungssituation an einem Fluchtort (14, 15) außerhalb des Bereiches (1) anwesenden Personen beziehungsweise Objekte ermittelt wird und die FLUCHT-Daten in der Datenbank abgespeichert werden,
**dadurch gekennzeichnet, dass**
als AUS-Daten die Menge der personenbezogenen und/oder objektbezogenen Daten der während eines den Gefahrauftrittszeitpunkt (16) und/oder den Gefahrfeststellungszeitpunkt (8) umfassenden Zeitraumes (9) den Bereich (1) durch Ausbuchen an einem Ausgang verlassenden Personen beziehungsweise Objekte ermittelt wird und die AUS-Daten in der Datenbank abgespeichert werden,
welche Personen beziehungsweise Objekte sich nicht an dem Fluchtort befinden.

2. Verfahren nach Anspruch 1, **dadurch gekennzeichnet, dass**
die IMBEREICH-Daten, die FLUCHT-Daten und die AUS-Daten abgeglichen werden.

3. Verfahren nach einem der Ansprüche 1 bis 2, **dadurch gekennzeichnet, dass**
die FLUCHT-Daten und die AUS-Daten an mehreren Fluchtorten (14, 15) beziehungsweise an mehreren Ausgängen ermittelt werden.

4. Verfahren nach einem der Ansprüche 1 bis 3, **dadurch gekennzeichnet, dass**
die personenbezogenen Daten in Form von Fotos einer Person beziehungsweise eines Objektes und/oder einer Person beziehungsweise einem Objekt zugewiesenen Codes und/oder Namen der Person beziehungsweise des Objektes verwendet werden.

5. Verfahren nach einem der Ansprüche 1 bis 4, **dadurch gekennzeichnet, dass**
als personenbezogene Daten einer Person beziehungsweise einer Gruppe die Gruppenzugehörigkeit der Person zu einer Personengruppe beziehungsweise die Gruppenzugehörigkeit des Objektes zu einer Objektgruppe und/oder Ortszugehörigkeit der Person beziehungsweise Ortszugehörigkeit eines Objektes zu einem Ort ermittelt und verwendet werden.

6. Verfahren nach einem der Ansprüche 1 bis 5, **dadurch gekennzeichnet, dass**
die Daten der IMBEREICH-Liste und die Daten der AUS-Liste mit einem Wichtungsfaktor versehen und nach dem Wichtungsfaktor geordnet werden,
welcher Wichtungsfaktor durch den Benutzer direkt oder indirekt vorgegeben wird.

7. Verfahren nach einem der Ansprüche 1 bis 6, **dadurch gekennzeichnet, dass**
ein Abstand einer an dem Fluchtort befindlichen Person zu einem den Fluchtort 14, 15 umfassenden Fluchtortbereich 23, 24 ermittelt wird.

8. Verfahren nach Anspruch 7, **dadurch gekennzeichnet, dass**
der Abstand jener Person ermittelt wird, deren personenbezogenen Daten als FLUCHT-Daten geführt werden.

9. Computer umfassend Mittel zur Durchführung des Verfahrens nach einem der Ansprüche 1 bis 8.

10. Computerprogramm umfassend Befehle, welche Befehle bei der Ausführung des Computerprogramms durch einen Computer diesen Computer veranlassen, das Verfahren nach einem der Ansprüche 1 bis 8 auszuführen.

11. Computerprogramm umfassend Befehle, welche Befehle bei der Ausführung des Computerprogramms durch den Computer einen weiteren Computer veranlassen, das Verfahren nach einem der Ansprüche 1 bis 8 auszuführen.
